# EUROPEAN PATENT SPECIFICATION

(11) **EP 3 836 049 B1**
(45) Date of publication and mention of the grant of the patent: **20.12.2023**
(21) Application number: 18935631.4
(22) Date of filing: 29.09.2018
(51) Int. Cl.: G05B 19/418, G05B 17/02, G06Q 10/06, G06Q 10/04, G06Q 10/10, G06Q 50/02, G16Y 10/05, G16Y 20/10, G16Y 40/10, G16Y 40/35

(54) **DATA PROCESSING SYSTEM AND METHOD, STORAGE MEDIUM AND COMPUTER PROGRAM PRODUCT**
DATENVERARBEITUNGSSYSTEM UND -VERFAHREN, SPEICHERMEDIUM UND COMPUTERPROGRAMMPRODUKT
SYSTÈME ET PROCÉDÉ DE TRAITEMENT DE DONNÉES, SUPPORT D'INFORMATIONS ET PRODUIT PROGRAMME INFORMATIQUE

(43) Date of publication of application: 16.06.2021
(73) Proprietor: Siemens Aktiengesellschaft, 80333 München (DE); Shen, Yixuan, Shanghai 200093 (CN)
(72) Inventor: SHEN, Yixuan, Shanghai 200093 (CN)
(74) Representative: Isarpatent
(86) International application number: PCT/CN2018/108806
(87) International publication number: WO 2020/062168

(56) References cited:
- EP-A1- 3 291 180
- EP-A2- 3 318 945
- CN-A- 108 428 477
- US-A1- 2016 247 129
- US-A1- 2016 247 129
- US-A1- 2018 054 376
- US-A1- 2018 210 436

## Description

### Technical Field

The present invention relates to data processing technologies, and in particular relates to a data processing system and a data processing method.

### Background Art

With the development of the Internet of Things (IoT), cloud systems are applied more and more widely. By using the IoT cloud service in plants, interactions with cloud systems in industrial processes can be realized. To be specific, in related technologies, sensors can be utilized to collect data related to equipment and technical processes in plants, the collected data is sent to cloud systems, the cloud systems can analyze the data, generate analysis reports and feed the reports back to control systems controlling the equipment and the technical processes, and thus the control over at least equipment or technical processes is realized.

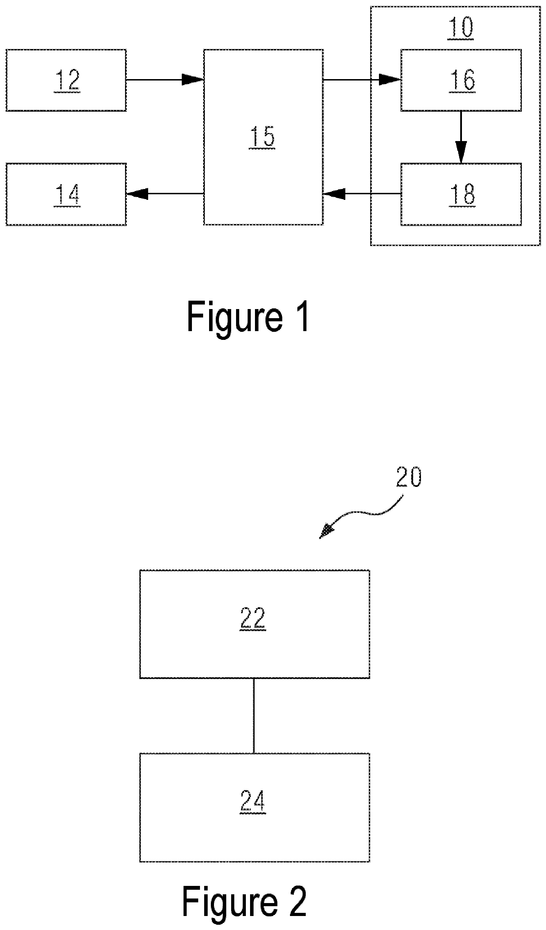

Fig. 1 is a schematic block diagram of interactions between a data processing system and a cloud system. As shown in Fig. 1, the sensor 12 collects data related to equipment running in a plant, generates sensor data and outputs it to the connecting apparatus 15 (usually an IoT machine), the connecting apparatus 15 runs the upload program therein to transmit sensor data to the cloud system 10, where cloud data 16 is formed, the cloud APP 18 processes the cloud data 16 to generate a processing result and feeds the processing result back to the connecting apparatus 15, the connecting apparatus 15 generates a corresponding control signal and sends it to the control system 14, and the control system 14 outputs a corresponding control instruction according to the control signal to realize the control over at least one of related equipment and technical processes.

During the running of the data processing system, data is uploaded by the upload program to the cloud system, and is downloaded from the cloud system when necessary. The upload program, and the download program if necessary, need to be tested or debugged so as to determine whether they can accurately upload or download data. The programs must be tested in a real plant. This is inconvenient for the development of the programs. In addition, the test period is long and data available for the test is limited. Furthermore, the test can usually be run only on a real machine.

One current solution is that engineers use mock data to perform a test on an IoT machine. To be specific, a custom program is run on the IoT machine to generate some mock data, and then the upload program is utilized to send the mock data to the cloud system. This solution helps to debug the upload program. Another solution is that IoT tools (for example, Node Red and Node js) are used, that is to say, engineers can conveniently debug the upload program by using these tools. However, how to generate the mock data and how the mock data accurately reflects the real plant data (for example, real sensor data) need be considered. Currently, the solution cannot satisfactorily solve these problems, that is to say, the solution actually fails to reflect the real condition in a plant. Therefore, the solution has no great practical significance.

US 2016/247129 A1 relates to a system for using digital twins for scalable, model-based machine predictive maintenance, in particular it relates to systems, methods, and apparatuses for creating and utilizing digital twins for energy efficient asset maintenance.

### Summary of the Invention

The embodiments of the present application provide a data processing system and data processing method so as to solve at least the problem of inconvenience of related program debugging or testing in data processing of related technologies.

The invention is defined by the independent claims 1 and 5.

According to one aspect of the embodiments of the present application, a data processing system is provided according to claim 1.

In this way, a digital twin is utilized to simulate data related to at least one of plant equipment and a technical process in a plant and the data is sent by the virtual processing apparatus to the cloud system. Thus, processing of related data and program debugging or testing can be realized outside the plant. This solves the problem of inconvenience during the development of programs.

In the data processing system of the present invention, the data processing system comprises: a third simulation unit, configured to generate a virtual data transmission apparatus so that the virtual data transmission apparatus can acquire first data from the digital twin and send the first data to the virtual processing apparatus.

In this way, with the aid of the virtual data transmission apparatus, data can be more favorably acquired from the digital twin and sent to the virtual processing apparatus.

In one illustrative embodiment of the data processing system, the first simulation unit comprises an application programming interface (API), and the third simulation unit accesses the first simulation unit via the API so that the virtual data transmission apparatus can acquire the first data from the digital twin.

In this way, the third simulation unit can utilize the API of the first simulation unit to realize the access to the first simulation unit.

In the data processing system of the present invention, the third simulation unit generates a virtual data transmission apparatus consisting of: an acquisition unit, configured to acquire the first data, and a first sending unit, configured to send the first data acquired by the acquisition unit to the virtual processing apparatus.

In this way, the acquisition unit of the virtual data transmission apparatus generated by the third simulation unit can acquire the first data from the digital twin, and the first sending unit of the virtual data transmission apparatus generated by the third simulation unit can send the first data acquired by the acquisition unit to the virtual processing apparatus.

In one illustrative embodiment of the data processing system, the third simulation unit generates the virtual data transmission apparatus consisting of: a receiving unit, configured to receive a control signal from the virtual processing apparatus, wherein the control signal is a signal generated by the control signal generation unit of the virtual processing apparatus based on second data obtained after the cloud system processes the first data and used for controlling the operations of the digital twin, and a second sending unit, configured to send the control signal to the digital twin.

In this way, the receiving unit receives a control signal from the virtual processing apparatus and the second sending unit sends the control signal to the digital twin. Thus, the control over the operations of the digital twin is realized.

In the data processing system of the present invention, the second simulation unit generates the virtual processing apparatus consisting of: a first communication unit, configured to receive the first data from the virtual data transmission apparatus and send the first data to the cloud system.

In this way, the first communication unit receives the first data from the virtual data transmission apparatus and sends the first data to a cloud system. Thus, data interactions between the first simulation unit and the cloud system are realized.

In the data processing system of the present invention, the second simulation unit generates the virtual processing apparatus consisting of: a control signal generation unit, configured to generate a control signal for controlling the operations of the digital twin based on second data obtained after the cloud system processes the first data, and a second communication unit, configured to receive the second data, send the second data to the control signal generation unit, receive a control signal from the control signal generation unit and send the control signal to the virtual data transmission apparatus.

In this way, the control signal generation unit generates a control signal based on second data obtained after the cloud system processes the first data, and the second communication unit sends the control signal to the virtual data transmission apparatus and then to the digital twin of the first simulation unit. Thus, the control over the digital twin is realized.

In the data processing system of the present invention, the second simulation unit further generates the virtual processing apparatus consisting of a program editing unit and the program editing unit is configured to edit an upload program so that the first communication unit can execute the upload program to utilize the API of the cloud system to send the first data to the cloud system.

In this way, the second simulation unit generates the virtual processing apparatus consisting of a program editing unit, and the program editing unit is configured to edit an upload program. Thus, a program can be edited in the virtual processing apparatus and the problem that an upload program can be edited (debugged) only in a real plant in related technologies is solved.

In the data processing system of the present invention, the program editing unit is further configured to edit a download program so that the second communication unit can execute the download program to utilize the API of the cloud system to download second data obtained after the cloud system processes the first data to the virtual processing apparatus.

In this way, the program editing unit can edit a download program in the second communication unit and the problem that a download program can be edited (debugged) only in a real plant in related technologies is solved.

In one illustrative embodiment of the data processing system, the program editing unit is further configured to modify program codes of at least one of the upload program and the download program to generate an upload program for replacing the current modified upload program or a download program for replacing the current modified download program.

In this way, at least one of the upload program and the download program can be improved so that a higher-performance upload program and download program can be used to replace the previous upload program and download program respectively to improve the data transmission performance.

In one illustrative embodiment of the data processing system, the program editing unit modifies program codes of at least one of the upload program and the download program according to the received instruction.

In this way, an instruction can be sent to the program editor as required during the running of the upload program and/or download program so that the program editor can modify program codes.

In one illustrative embodiment of the data processing system, the second simulation unit is configured to generate a virtual processing apparatus communication-connected with a connecting apparatus between a sensor for acquiring related data of at least one of the plant equipment and the technical process and the cloud system, the connecting apparatus is configured to send data detected by the sensor and related to at least of one of the plant equipment and the technical process to the cloud system, receive data obtained after the cloud system processes the related data from the cloud system, generate a control signal based on the data obtained after the processing and send the control signal to a control system or the plant equipment to control at least one of the plant equipment and the technical process; the data processing system further comprises a write unit, which is configured to write the upload program after the modification into the connecting apparatus so that the connecting apparatus can execute the upload program after the modification to send data detected by the sensor and related to at least one of the plant equipment and the technical process to the cloud system, or configured to write the download program after the modification into the connecting apparatus so that the connecting apparatus can execute the download program after the modification to download the second data to the connecting apparatus.

In this way, after upload programs and download programs are debugged in the virtual processing apparatus and a higher-performance upload program and download program are obtained, the higher-performance upload program and download program can be written into the connecting apparatus communication-connected between a sensor for acquiring related data of at least one of the plant equipment and the technical process in a plant and the cloud system so that higher-performance programs are used to replace the original programs in the connecting apparatus to improve the data transmission performance.

According to another aspect of the embodiments of the present application, a data processing method is provided according to claim 5.

In this way, a digital twin is utilized to simulate data related to at least one of plant equipment and a technical process in a plant and the data is sent by the virtual processing apparatus to the cloud system. Thus, processing of related data and program debugging or testing can be realized outside the plant. This solves the problem of inconvenience during the development of programs.

The data processing method comprises: a third simulation unit generating a virtual data transmission apparatus so that the virtual data transmission apparatus can acquire first data from the digital twin and send the first data to the virtual processing apparatus.

In this way, with the aid of the virtual data transmission apparatus, data can be more favorably acquired from the digital twin and sent to the virtual processing apparatus.

According to the embodiments of the present application, the third simulation unit accesses the first simulation unit via the API of the first simulation unit so that the virtual data transmission apparatus can acquire the first data from the digital twin.

In this way, the third simulation unit can utilize the API of the first simulation unit to realize the access to the first simulation unit.

According to the embodiments of the present application, the acquisition unit of the virtual data transmission apparatus acquires the first data, and the first sending unit of the virtual data transmission apparatus sends the first data acquired by the acquisition unit to the virtual processing apparatus.

In this way, first data can be acquired from the digital twin and the first data acquired by the acquisition unit can be sent to the virtual processing apparatus.

According to the embodiments of the present application, the receiving unit of the virtual data transmission apparatus receives a control signal from the virtual processing apparatus, wherein the control signal is a signal generated by the virtual processing apparatus based on second data obtained after the cloud system processes the first data and used for controlling the operations of the digital twin, and a second sending unit of the virtual data transmission apparatus sends the control signal to the digital twin.

In this way, the receiving unit receives a control signal from the virtual processing apparatus and the second sending unit sends the control signal to the digital twin. Thus, the control over the operations of the digital twin is realized.

According to the embodiments of the present application, the first communication unit of the virtual processing apparatus receives the first data from the virtual data transmission apparatus and sends the first data to the cloud system.

In this way, the first communication unit receives the first data from the virtual data transmission apparatus and sends the first data to a cloud system. Thus, data interactions between the first simulation unit and the cloud system are realized.

According to the embodiments of the present application, the control signal generation unit of the virtual processing apparatus generates a control signal for controlling the operations of the digital twin based on second data obtained after the cloud system processes the first data, and the second communication unit of the virtual processing apparatus receives the second data, sends the second data to the control signal generation unit, receives a control signal from the control signal generation unit and sends the control signal to the virtual data transmission apparatus.

In this way, the control signal generation unit generates a control signal based on second data obtained after the cloud system processes the first data, and the second communication unit sends the control signal to the virtual data transmission apparatus and then to the digital twin of the first simulation unit. Thus, the control over the operations of the digital twin is realized.

According to the present invention, the program editing unit of the virtual processing apparatus edits an upload program so that the first communication unit can execute the upload program to utilize the API of the cloud system to send the first data to the cloud system.

In this way, the second simulation unit generates the virtual processing apparatus consisting of a program editing unit, and the program editing unit is configured to edit an upload program. Thus, a program can be edited in the virtual processing apparatus and the problem that an upload program can be edited (debugged) only in a real plant in related technologies is solved.

According to the present invention, the program editing unit further edits a download program so that the second communication unit can execute the download program to utilize the API of the cloud system to download second data obtained after the cloud system processes the first data to the virtual processing apparatus.

In this way, the program editing unit can edit a download program in the second communication unit and the problem that a download program can be edited (debugged) only in a real plant in related technologies is solved.

According to the embodiments of the present application, the program editing unit modifies program codes of at least one of the upload program and the download program to generate an upload program for replacing the current modified upload program or a download program for replacing the current modified download program.

In this way, at least one of the upload program and the download program can be improved so that a higher-performance upload program and download program can be used to replace the previous upload program and download program respectively.

According to the embodiments of the present application, the program editing unit modifies program codes of at least one of the upload program and the download program according to the received instruction.

In this way, an instruction can be sent to the program editor as required during the running of the upload program and/or download program so that the program editor can modify program codes.

According to the embodiments of the present application, the second simulation unit generates a virtual processing apparatus communication-connected with a connecting apparatus between a sensor for acquiring related data of at least one of the plant equipment and the technical process and the cloud system, and the connecting apparatus sends data detected by the sensor and related to at least of one of the plant equipment and the technical process to the cloud system, receives data obtained after the cloud system processes the related data from the cloud system, generates a control signal based on the data obtained after the processing and sends the control signal to a control system or the plant equipment to control at least one of the plant equipment and the technical process; the write unit of the data processing system writes the upload program after the modification into the connecting apparatus so that the connecting apparatus can execute the upload program after the modification to send data detected by the sensor and related to at least one of the plant equipment and the technical process to the cloud system, or writes the download program after the modification into the connecting apparatus so that the connecting apparatus can execute the download program after the modification to download the second data to the connecting apparatus.

In this way, after upload programs and download programs are debugged in the virtual processing apparatus and a higher-performance upload program and download program are obtained, the higher-performance upload program and download program can be written into the connecting apparatus communication-connected between a sensor for acquiring related data of at least one of the plant equipment and the technical process in a plant and the cloud system so that higher-performance programs are used to replace the original programs in the connecting apparatus to improve the data transmission performance.

In the embodiments of the present application, through the combination of the digital twin and the virtual processing apparatus (for example, a virtual machine), a simulation of data transmission in a plant is realized and direct program debugging on the virtual processing apparatus is realized, thus solving the problem of inconvenience of related program debugging or testing in data processing of related technologies and improving the development efficiency.

### Brief Description of the Drawings

The drawings described here are used to provide a better understanding of the present application and constitute a part of the present application. The illustrative embodiments and the descriptions of the present application are used to explain the present application, but do not constitute an improper limitation of the present application. In the drawings:
Fig. 1 is a schematic block diagram of interactions between the data processing system and the cloud system,
Fig. 2 is a block diagram of the data processing system according to one illustrative embodiment of the present application,
Fig. 3 is a block diagram of the data processing system according to another illustrative embodiment of the present application,
Fig. 4 is a detailed block diagram of the data processing system according to one illustrative embodiment of the present application,
Fig. 5 is a block diagram of interactions between the data processing system and the cloud system according to one illustrative embodiment of the present application,
Fig. 6 is a block diagram of interactions between the digital twin, API and virtual data transmission apparatus of the data processing system according to one illustrative embodiment of the present application,
Fig. 7 is another block diagram of interactions between the digital twin, API and virtual data transmission apparatus of the data processing system according to one illustrative embodiment of the present application,
Fig. 8 is a schematic diagram of interactions between the second simulation unit of the data processing system and the cloud system according to one illustrative embodiment of the present application,
Fig. 9 is a schematic block diagram of interactions between the data processing system and the connecting apparatus according to one illustrative embodiment of the present application, and
Fig. 10 is a flowchart of the data processing method according to one illustrative embodiment of the present application.

### Description of reference numerals in the attached drawings

12: sensor,
14: control system,
15: connecting apparatus,
10: cloud system,
16: cloud data,
18: cloud APP,
20: data processing system,
22: first simulation unit,
24: second simulation unit,
30: data processing system,
26: third simulation unit,
222: digital twin,
224: application programming interface (API),
260: virtual data transmission apparatus,
262: acquisition unit,
264: first sending unit,
266: receiving unit,
268: second sending unit,
240: virtual processing apparatus,
242: first communication unit,
244: program editing unit,
246: second communication unit,
248: control signal generation unit,
50: cloud system,
52: cloud data,
54: cloud APP,
210: virtual port,
250: upload program,
252: download program,
S102, the first simulation unit generates a digital twin of at least one of plant equipment and a technical process,
S104, the second simulation unit generates a virtual processing apparatus so that the virtual processing apparatus can receive first data coming from the digital twin and related to the running of the digital twin and send the received first data to the cloud system.

### Detailed Description of the Invention

To let those skilled in the art better understand the technical solutions of the present application, the technical solutions in the embodiments of the present application will described clearly and completely below in combination with the drawings in the embodiments of the present application. Obviously, the embodiments described are only a part, but not all, of the embodiments of the present application. All other embodiments obtained by those skilled in the art on the basis of the embodiments of the present application without any creative work should fall within the scope of protection of the present application.

It should be noted that the terms "comprise" and "have" and their variants in the description, claims and drawings of the present application are intended to cover non-exclusive inclusions. For example, the process or method comprising a series of steps or the system, product or equipment comprising a series of modules or units are not necessarily limited to those clearly listed steps or units, but may comprise other steps or modules or units which are not clearly listed or are intrinsic to the process, method, product or equipment.

A digital twin means copying a physical object in a digital way, simulating the behaviors of the object in a real environment and performing virtual simulations for products, manufacturing processes and even the whole plant, thus improving the production efficiency of manufacturing enterprises in R&D and manufacturing of products.

Digital twins include digital twins of products, digital twins of production process flows and digital twins of equipment. These twins integrate their respective know-how into a data model and also integrate product lifecycle management (PLM), the manufacturing execution system (MES) and totally integrated automation (TIA) into a data platform.

In the production management field, a digital model can be built in a production management system, and production can be scheduled, adjusted and optimized on an operation and production management platform.

A digital twin can build a whole technical process to realize direct interventions in manufacturing. According to the concept of the digital twin, a virtual plant can be set up outside a real plant, and real production equipment is rebuilt on the basis of the virtual level. Not only does production equipment realize virtual interactions with all machinery, but also the dynamic state of the batching system is transmitted during actual manufacturing. In a digital twin, the visualization of a manufacturing process depends on a plurality of sensors, and with the aid of the sensors, the operation of a single workstation is under control. Production planners can analyze technical processes and optimize or recombine specific steps in virtual images. For example, digital twins of a technical process may comprise the digital twins of equipment and the digital twins of products involved in the completion of the technical process.

Specific embodiments of the present invention will be described below in combination with the drawings.

According to the embodiments of the present application, a data processing system is provided. Fig. 2 is a block diagram of the data processing system according to one illustrative embodiment of the present application.

As shown in Fig. 2, the data processing system 20 according to the present invention comprises: a first simulation unit 22, configured to generate a digital twin of at least one of plant equipment and a technical process, and a second simulation unit 24, configured to generate a virtual processing apparatus so that the virtual processing apparatus can receive first data coming from the digital twin and related to the running of the digital twin and send the received first data to a cloud system.

Plant equipment can be any equipment in a plant, for example, various manufacturing equipment, transmission equipment and power supply equipment.

A technical process is usually a process of various technical manufacturing implemented through the operation of equipment. For example, the production of ceramic tiles comprises a series of processes such as crushing and grinding of materials, transferring of materials, material distribution by a material distributor, pressing by a press and burning in a furnace.

Digital twins can be generated for all these types of equipment and related technical processes in a digital way.

The cloud system, namely, cloud platform, may exist in a plurality of forms, Mindsphere developed by Siemens, for example.

In the present invention, the high simulation performance of a digital twin simulating plant equipment and technical processes in a real environment is utilized to provide data interacted with the cloud system, and then debugging of corresponding upload programs and download programs is implemented. In this way, by utilizing the digital twin to simulate data related to at least one of plant equipment and a technical process in a plant and sending the data to a cloud system through a virtual processing apparatus, processing of related data and program testing or debugging can be realized outside the plant, thus solving the problem of inconvenience during the development of programs.

According to the present invention, the data processing system further comprises: a third simulation unit, configured to generate a virtual data transmission apparatus so that the virtual data transmission apparatus can acquire first data from the digital twin and send the first data to the virtual processing apparatus.

In this way, with the aid of the virtual data transmission apparatus, data can be more favorably acquired from the digital twin and sent to the virtual processing apparatus.

According to the embodiments of the present application, the first simulation unit comprises an API and the third simulation unit accesses the first simulation unit via the API so that the virtual data transmission apparatus can acquire the first data from the digital twin.

In this way, the third simulation unit can utilize the API of the first simulation unit to realize the access to the first simulation unit.

According to the embodiments of the present application, the third simulation unit generates a virtual data transmission apparatus consisting of: an acquisition unit, configured to acquire the first data, and a first sending unit, configured to send the first data acquired by the acquisition unit to the virtual processing apparatus.

In this way, the acquisition unit of the virtual data transmission apparatus generated by the third simulation unit can acquire the first data from the digital twin, and the first sending unit of the virtual data transmission apparatus generated by the third simulation unit can send the first data acquired by the acquisition unit to the virtual processing apparatus.

According to the embodiments of the present application, the third simulation unit generates the virtual data transmission apparatus consisting of: a receiving unit, configured to receive a control signal from the virtual processing apparatus, wherein the control signal is a signal generated by the control signal generation unit of the virtual processing apparatus based on second data obtained after the cloud system processes the first data and used for controlling the operations of the digital twin, and a second sending unit, configured to send the control signal to the digital twin.

In this way, the receiving unit receives a control signal from the virtual processing apparatus and the second sending unit sends the control signal to the digital twin. Thus, the control over the operations of the digital twin is realized.

According to the present invention, the second simulation unit further generates the virtual processing apparatus consisting of: a first communication unit, configured to receive the first data from the virtual data transmission apparatus and send the first data to the cloud system.

In this way, the first communication unit receives the first data from the virtual data transmission apparatus and sends the first data to a cloud system. Thus, data interactions between the first simulation unit and the cloud system are realized.

According to the present invention, the second simulation unit further generates the virtual processing apparatus consisting of: a control signal generation unit, configured to generate a control signal for controlling the operations of the digital twin based on second data obtained after the cloud system processes the first data, and a second communication unit, configured to receive the second data, send the second data to the control signal generation unit, receive a control signal from the control signal generation unit and send the control signal to the virtual data transmission apparatus.

In this way, the control signal generation unit generates a control signal based on second data obtained after the cloud system processes the first data, and the second communication unit sends the control signal to the virtual data transmission apparatus and then to the digital twin of the first simulation unit. Thus, the control over the operations of the digital twin is realized.

According to present invention, the second simulation unit further generates the virtual processing apparatus consisting of a program editing unit and the program editing unit is configured to edit an upload program so that the first communication unit can execute the upload program to utilize the API of the cloud system to send the first data to the cloud system.

In this way, the second simulation unit generates the virtual processing apparatus consisting of a program editing unit, and the program editing unit is configured to edit an upload program. Thus, a program can be edited in the virtual processing apparatus and the problem that an upload program can be edited (debugged) only in a real plant in related technologies is solved.

According to the present invention, the program editing unit further edits a download program so that the second communication unit can execute the download program to utilize the API of the cloud system to download second data obtained after the cloud system processes the first data to the virtual processing apparatus.

In this way, the program editing unit can edit a download program in the second communication unit and the problem that a download program can be edited (debugged) only in a real plant in related technologies is solved.

According to the embodiments of the present application, the program editing unit further modifies program codes of at least one of the upload program and the download program to generate an upload program for replacing the current modified upload program or a download program for replacing the current modified download program.

In this way, at least one of the upload program and the download program can be improved so that a higher-performance upload program and download program can be used to replace the previous upload program and download program respectively to improve the data transmission performance.

According to the embodiments of the present application, the program editing unit modifies program codes of at least one of the upload program and the download program according to the received instruction.

In this way, an instruction can be sent to the program editor as required during the running of the upload program and/or download program so that the program editor can modify program codes.

According to the embodiments of the present application, the second simulation unit is configured to generate a virtual processing apparatus communication-connected with a connecting apparatus between a sensor for acquiring related data of at least one of the plant equipment and the technical process and the cloud system, and the connecting apparatus is configured to send data detected by the sensor and related to at least of one of the plant equipment and the technical process to the cloud system, receive data obtained after the cloud system processes the related data from the cloud system, generate a control signal based on the data obtained after the processing and send the control signal to a control system or the plant equipment to control at least one of the plant equipment and the technical process; the data processing system further comprises a write unit, configured to write the upload program after the modification into the connecting apparatus so that the connecting apparatus can execute the upload program after the modification to send data detected by the sensor and related to at least one of the plant equipment and the technical process to the cloud system, or configured to write the download program after the modification into the connecting apparatus so that the connecting apparatus can execute the download program after the modification to download the second data to the connecting apparatus.

The first data is data corresponding to the data acquired from the digital twin and acquired by the sensor from at least one of plant equipment and a technical process.

In this way, after upload programs and download programs are debugged in the virtual processing apparatus and a higher-performance upload program and download program are obtained, the higher-performance upload program and download program can be written into the connecting apparatus communication-connected between a sensor for acquiring related data of at least one of the plant equipment and the technical process in a plant and the cloud system so that higher-performance programs are used to replace the original programs in the connecting apparatus to improve the data transmission performance.

In this way, data uploading and downloading can be easily realized, debugging of an upload program and/or download program can conveniently be realized in the virtual processing apparatus (for example, virtual machine), and the defect in the prior art that an upload program and/or download program can be debugged only in the field is overcome. The accuracy and reliability of data processing results can be improved.

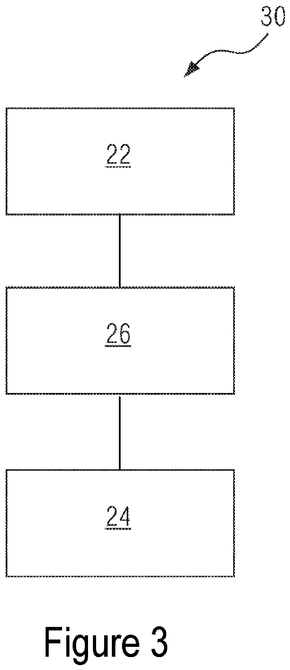

According to the present invention of the present application, a data processing system is provided. Fig. 3 is a block diagram of the data processing system 30 according to another illustrative embodiment of the present application.

As shown in Fig. 3, the data processing system 30 according to another embodiment of the present application comprises: a first simulation unit 22, configured to generate a digital twin of at least one of plant equipment and a technical process, and a second simulation unit 24, configured to generate a virtual processing apparatus so that the virtual processing apparatus can receive first data coming from the digital twin and related to the running of the digital twin and send the received first data to a cloud system. In addition, the data processing system further comprises: a third simulation unit 26, configured to generate a virtual data transmission apparatus (not shown in Fig. 3) so that the virtual data transmission apparatus can acquire first data from the digital twin and send the first data to the virtual processing apparatus (not shown in Fig. 3).

In this way, with the aid of the virtual data transmission apparatus generated by the third simulation unit 26, data can be more favorably acquired from the digital twin and sent to the virtual processing apparatus. That is to say, a bridge is established between the first simulation unit 22 and the second simulation unit 24 to help the two to communicate with each other.

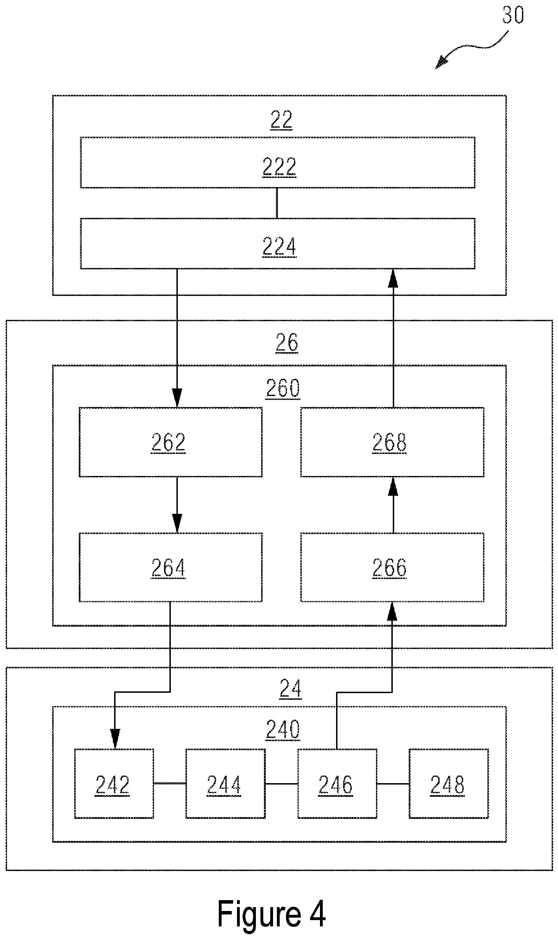

The data processing system 30 is further described in combination with Fig. 4.

Fig. 4 is a detailed block diagram of the data processing system according to one illustrative embodiment of the present application.

As shown in Fig. 4, the data processing system 30 may comprise a first simulation unit 22, a second simulation unit 24 and a third simulation unit 26.

The first simulation unit 22 is configured to generate a digital twin 222 of at least one of plant equipment and a technical process; in addition, the first simulation unit 22 comprises an API 224, and the API 224 can be used as an interface via which the third simulation unit 26 accesses the first simulation unit 22.

The third simulation unit 26 is configured to generate a virtual data transmission apparatus 260, and the virtual data transmission apparatus 260 acquires first data from the digital twin 222 and sends the first data to the virtual processing apparatus 240 of the second simulation unit 24. The third simulation unit 26 accesses the first simulation unit 22 via the API 224 of the first simulation unit 22 so that the virtual data transmission apparatus 260 can acquire the first data from the digital twin 222. In the embodiment, the API 224 of the first simulation unit 22 is fully utilized so that data can conveniently be acquired from the digital twin 222.

The third simulation unit 26 generates the virtual data transmission apparatus 260 consisting of: an acquisition unit 262, configured to acquire first data from the digital twin 222 of the first simulation unit 22, and a second sending unit 264, configured to send the first data acquired by the acquisition unit 262 to the virtual processing apparatus 240. The acquisition unit 262 can acquire data from the digital twin, as required. For example, conditions can be preset in the virtual data transmission apparatus 260 to indicate how often the acquisition unit 262 acquires data and what data it acquires. For example, the power, the speed, the time, the voltage, the current and the temperature can be designated.

The third simulation unit 26 further generates the virtual data transmission apparatus 260 consisting of: a receiving unit 266, configured to receive a control signal from the virtual processing apparatus 240, wherein the control signal is a signal generated by the virtual processing apparatus 240 based on second data obtained after the cloud system processes the first data and used for controlling the operations of the digital twin 222, and a second sending unit 268, configured to send the control signal to the digital twin 222.

The second simulation unit 24 is configured to generate a virtual processing apparatus 240 so that the virtual processing apparatus 240 can receive first data coming from the digital twin 222 and related to the running of the digital twin 222 and send the received first data to a cloud system. In the embodiment, the second simulation unit 24 receives data transmitted by the virtual data transmission apparatus 26 generated by the third simulation unit 26 and coming from the digital twin 222. The second simulation unit 24 further generates the virtual processing apparatus 240 consisting of a first communication unit 242, configured to receive the first data from the virtual data transmission apparatus 260 and send the first data to the cloud system. The virtual processing apparatus 240 has a virtual operating system and the virtual operating system comprises a library required for the connection with the cloud system.

The second simulation unit 24 further generates the virtual processing apparatus 240 consisting of: a control signal generation unit 248, configured to generate a control signal for controlling the operations of the digital twin 222 based on second data obtained after the cloud system processes the first data, and a second communication unit 246, configured to receive the second data, send the second data to the control signal generation unit 248, receive a control signal from the control signal generation unit 248 and send the control signal to the virtual data transmission apparatus 260.

The second simulation unit 24 is further configured to generate the virtual processing apparatus 240 consisting of a program editing unit 244, wherein the program editing unit 244 is configured to edit an upload program so that the first communication unit 242 can execute the upload program to utilize the API of the cloud system to send the first data to the cloud system. The program editing unit 244 is further configured to edit a download program so that the second communication unit 246 can execute the download program to utilize the API of the cloud system to download second data obtained after the cloud system processes the first data to the virtual processing apparatus 240. The program editing unit 244 is further configured to modify program codes of at least one of the upload program and the download program to generate an upload program for replacing the current modified upload program or a download program for replacing the current modified download program. The program editing unit 244 can modify program codes of at least one of the upload program and the download program according to the received instruction.

In addition, the second simulation unit 24 may be configured to generate a virtual processing apparatus communication-connected with a connecting apparatus (for example, a data transmission apparatus) between a sensor for acquiring related data of at least one of the plant equipment and the technical process and the cloud system (that is, the connecting apparatus is communication-connected between a sensor for acquiring related data of at least one of the plant equipment and the technical process and the cloud system, wherein the second simulation unit 24 may be configured to generate the virtual processing apparatus of the connecting apparatus), the connecting apparatus is configured to send data detected by the sensor and related to at least of one of the plant equipment and the technical process to the cloud system, receive data obtained after the processing of the related data from the cloud system, generate a control signal based on the data obtained after the processing and send the control signal to a control system or the plant equipment to control at least one of the plant equipment and the technical process. In addition, the control signal may directly be sent to the plant equipment so that the plant equipment and/or the technical process is controlled, or the control system may be sent to a control system so that the plant equipment and/or the technical process is controlled via the control system. These two control modes can be selected according to the practical requirements.

The second simulation unit 24 may be configured to generate the corresponding virtual processing apparatus communication-connecting the plant equipment to a data transmission apparatus of a cloud.

In addition, the data processing system further comprises a write unit 36, configured to write the upload program after the modification into the connecting apparatus so that the connecting apparatus can execute the upload program after the modification to send data detected by the sensor and related to at least one of the plant equipment and the technical process to the cloud system, or configured to write the download program after the modification into the connecting apparatus so that the connecting apparatus can execute the download program after the modification to download the second data to the connecting apparatus.

The write unit 36 may be implemented in a plurality of forms, for example, a recorder. The upload and/or download program after the modification in the virtual processing apparatus can first be copied into a universal serial bus (USB) disk, and then into the recorder via the USB disk, and the program is written by the recorder into the transmission apparatus. Or, when the size of data is not large, data can directly be transmitted to the recorder over a network, instead of using a USB disk. Of course, the present invention includes any way used to write the program into the connecting apparatus according to the actual requirements, but is not limited to the above-mentioned ways.

In this way, an upload program and download program can conveniently be debugged in the virtual processing apparatus, and then the debugged upload program and download program can be used to replace the upload program and download program in the connecting apparatus to improve the data transmission performance of the data transmission apparatus in the plant.

In a word, by using the embodiment, data processing and program debugging outside the plant are realized and the problem of processing inconvenience during the development of programs is solved. In addition, by using the embodiment, data processed by the cloud system can further be used to improve the model in the simulator.

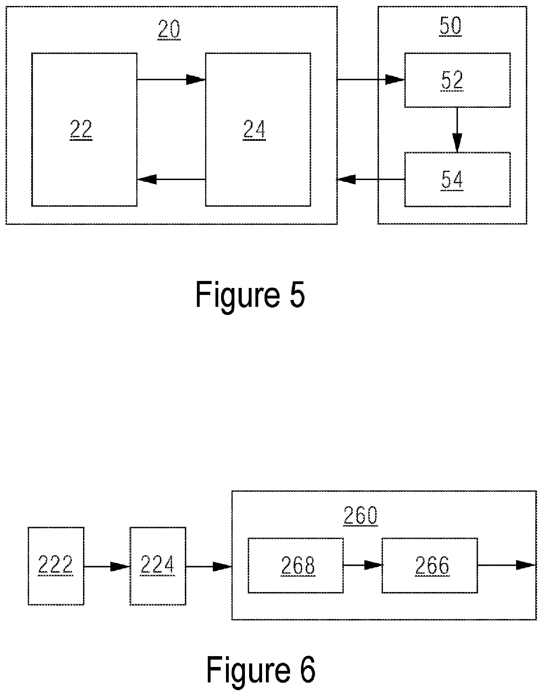

Fig. 5 is a block diagram of interactions between the data processing system and the cloud system according to one illustrative embodiment of the present application.

According to the embodiments of the present application, the left in the figure is the data processing system 20, which comprises the first simulation unit 22 and the second simulation unit 24, as shown in Fig. 5. The first simulation unit 22 is configured to generate a digital twin of at least one of the plant equipment and the technical process, and the second simulation unit 24 is configured to generate the virtual processing apparatus so that the virtual processing apparatus can receive first data coming from the digital twin and related to the running of the digital twin and send the received first data to the cloud system 50.

The two boxes shown in the cloud system 50 represent cloud data 52 (namely, data formed in a cloud) and a cloud APP 54 (for example, an application developed based on a cloud and/or run based on the cloud platform), respectively. Cloud data 52 is formed based on the first data coming from the data processing system 20. The cloud APP 54 analyzes and processes the first data to generate an analysis report (namely, second data), and specific suggestions on the improvement of the digital twin are given in the analysis report. The cloud APP 54 sends the second data to the data processing system 20. To be specific, the second data is first received by the second simulation unit 24, and the second simulation unit 24 processes the received second data to generate a control signal for controlling the operations of the digital twin of the first simulation unit and sends the control signal to the first simulation unit 22. Thus, the control over the digital twin is realized.

The virtual processing apparatus can use an API in the cloud system to acquire the second data from the cloud system 50. When no API is available in the cloud system, the second data can be acquired from the cloud system 50 in the form of webpage by using the hypertext transfer protocol (HTTP).

Fig. 6 is a block diagram of interactions between the digital twin, API and virtual data transmission apparatus of the data processing system according to one illustrative embodiment of the present application.

For the sake of clarity, the first simulation unit and the second simulation unit are not shown, and only the units generated by or contained in the first and second simulation units are shown in Fig. 6. To be specific, the digital twin 222 and the API 224 are shown on the left, and the virtual data transmission apparatus 260 is shown on the right. The virtual data transmission apparatus 260 comprises an acquisition unit 262 and a first sending unit 264.

The acquisition unit 262 acquires first data from the digital twin 222 via the application programming interface 224, and the first sending unit 264 sends the first data acquired by the acquisition unit 262 to the virtual processing apparatus via the virtual port (not shown) of the virtual processing apparatus.

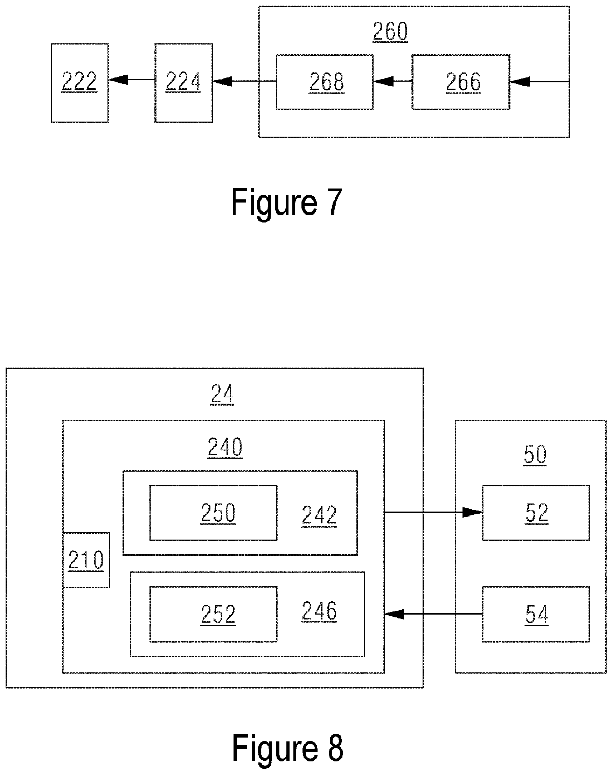

Fig. 7 is another block diagram of interactions between the digital twin, API and virtual data transmission apparatus of the data processing system according to one illustrative embodiment of the present application.

For the sake of clarity, the first simulation unit and the second simulation unit are not shown, and only the units generated by or contained in the first and second simulation units are shown in Fig. 7. To be specific, the digital twin 222 and the API 224 are shown on the left, and the virtual data transmission apparatus 260 is shown on the right. The virtual data transmission apparatus 260 shown in Fig. 7 comprises a second sending unit 268 and a receiving unit 266. Compared with Fig. 6, Fig. 7 only shows the components of the virtual data transmission apparatus 260 in the downlink data path (namely, the path of data transmitted from the cloud system to the digital twin). Fig. 6 only shows the components of the virtual data transmission apparatus 260 in the uplink data path (namely, the path of data transmitted to the cloud system).

The receiving unit 266 receives a control signal from the virtual processing apparatus, wherein the control signal is a signal generated by the virtual processing apparatus based on second data obtained after the cloud system processes the first data and used for controlling the operations of the digital twin, and the second sending unit 268 sends the control signal to the digital twin 222 via the API 224.

Although Figs. 6 and 7 show that different functional units are used in the virtual data transmission apparatus to realize uplink and downlink transmission of data, the embodiments of the present invention are not limited to the above-mentioned way. Instead, the functional units in the same path can be used to realize uplink and downlink transmission of data, that is to say, the components in the uplink and downlink paths may be separate components or may be integrated components.

Fig. 8 is a schematic diagram of interactions between the second simulation unit of the data processing system and the cloud system according to one illustrative embodiment of the present application.

As shown in Fig. 8, the second simulation unit 24 comprises a virtual processing apparatus 240 generated by the second simulation unit. The virtual processing apparatus 240 comprises a virtual port 210, a first communication unit 242, a second communication unit 246, and a program editing unit and a control signal generation unit which are not shown in the figure. The virtual port 210 is transformed into a port for communication between the virtual processing apparatus 240 and the first simulation unit (not shown).

The first communication unit 242 comprises an upload program 250, and the second communication unit 246 comprises a download program 252. The virtual processing apparatus 240 executes the upload program 250 in the first communication unit 242 to upload the data received via the virtual port 210 to the cloud system 50 to form cloud data 52. The cloud APP 54 analyzes and processes the cloud data 52 to obtain an analysis report, and executes the download program 252 in the second communication unit 246 to download the result to the virtual processing apparatus 240.

The program editing unit of the virtual processing apparatus 240 can edit the upload program. The first communication unit 242 executes the upload program 250 to send the first data to the cloud system 50 via the API of the cloud system.

In this way, by letting the program editing unit edit the upload program 250, the program can be edited in the virtual processing apparatus, thus solving the problem that the upload program can be edited (debugged) only in a real plant in related technologies.

The program editing unit is further configured to edit the download program 252 so that the second communication unit 246 can execute the download program 252 to utilize the API of the cloud system 50 to download second data obtained after the cloud system 50 processes the first data to the virtual processing apparatus.

In this way, the program editing unit edits the download program 252 in the second communication unit 246, solving the problem that a download program can be edited (debugged) only in a real plant in related technologies.

The program editing unit modifies program codes of at least one of the upload program 250 and the download program 252 according to the received instruction or the preset condition to generate an upload program for replacing the current modified upload program or a download program for replacing the current modified download program. In this way, at least one of the upload program and the download program can be improved so that a higher-performance upload program and download program can be used to replace the previous upload program and download program respectively.

In the embodiment, the upload program can be edited in the virtual processing apparatus. The upload program is executed to receive data from the virtual port and send data to the cloud system via the cloud API. The cloud APP can analyze the uploaded data and give an analysis report. The analysis report can be download to the virtual processing apparatus via the cloud API. Or, the analysis report can be downloaded to the virtual processing apparatus via HTTP.

In the embodiment, by utilizing the virtual processing apparatus generated by the second simulation unit, debugging or testing activities which could previously be performed only inside a plant can easily be realized outside the plant. For example, the virtual processing apparatus only needs to be built in a common PC. Therefore, related program debugging or testing can be performed in an office, for example.

In this way, by utilizing simulation data to simulate related data of at least one of plant equipment and technical processes in a plant and utilizing the virtual processing apparatus (for example, a virtual machine) to interact with the cloud system, data processing and program testing can be realized outside the plant, and the problem of processing inconvenience during the development of programs is solved.

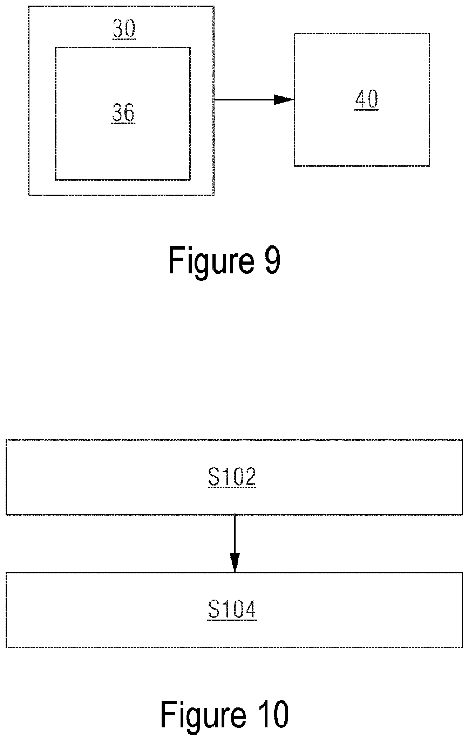

Fig. 9 is a schematic block diagram of interactions between the data processing system and the connecting apparatus according to one illustrative embodiment of the present application.

As shown in Fig. 9, the data processing system 30 further comprises a write unit 36, configured to write one or more of operating systems, application programs, and data in the virtual processing apparatus into the connecting apparatus, wherein the connecting apparatus is communication-connected between a sensor for acquiring related data of at least one of the plant equipment and the technical process and the cloud system, and is configured to send related data of at least one of plant equipment and the technical process to the cloud system, receive data obtained after the cloud system processes related data from the cloud system, generate a control signal based on the data obtained after the processing and send the control signal to a control system or the plant equipment to control at least one of the plant equipment and the technical process.

The write unit 36 is particularly configured to write the upload program after the modification into the connecting apparatus after the program editing unit modifies the upload program so that the connecting apparatus can execute the upload program after the modification to send data detected by the sensor and related to at least one of the plant equipment and the technical process to the cloud system, or write the download program after the modification into the connecting apparatus so that the connecting apparatus can execute the download program after the modification to download the second data to the connecting apparatus.

The connecting apparatus has an operating system, the connecting apparatus runs programs to send data to the cloud system and receive data obtained after the processing from the cloud system, generates a control signal based on the data obtained after the processing and sends the control signal to a control system or directly sends the control signal to the plant equipment to control at least one of the plant equipment and the technical process.

According to one embodiment of the present application, the connecting apparatus may be a common IoT machine, namely, an Internet of Things host, which is usually a host having a volume smaller than that of a general-purpose computer and a simple operating system in a plant. The virtual processing apparatus can be generated by the IoT machine by use of mirroring technology. For example, mirroring is obtained by copying the contents in the hard disks in the IoT machine, and then a virtual machine is generated. In this way, the virtual machine is generated by the IoT machine by use of mirroring technology, that is to say, a mirror of the IoT machine is generated by copying the contents in the hard disks of the IoT machine and then the virtual machine is obtained. The obtained virtual machine can highly simulate the performance of the IoT machine to ensure that the data processing system can simulate real data processing to the greatest extent.

Of course, the embodiments of the present invention are not limited to the generation of the virtual processing apparatus by use of mirroring technology. Instead, the virtual processing apparatus can be generated by the second simulation unit mentioned above.

In the embodiments of the present invention, the first simulation unit may be Tecnomatix software, the second simulation unit may be vmware software, and the third simulation unit may be a software plug-in or any software tool for generating the virtual data transmission apparatus.

Fig. 10 is a flowchart of the data processing method according to one illustrative embodiment of the present application.

As shown in Fig. 10, the method comprises: S102, the first simulation unit generating a digital twin of at least one of the plant equipment and the technical process, and S104, the second simulation unit generating the virtual processing apparatus so that the virtual processing apparatus can receive first data coming from the digital twin and related to the running of the digital twin and send the received first data to the cloud system.

In this way, a digital twin is utilized to simulate data related to at least one of plant equipment and a technical process in a plant and the data is sent by the virtual processing apparatus to the cloud system. Thus, processing of related data and program debugging or testing can be realized outside the plant. This solves the problem of inconvenience during the development of programs.

According to the present invention, the data processing method further comprises: the third simulation unit generating a virtual data transmission apparatus so that the virtual data transmission apparatus can acquire first data from the digital twin and send the first data to the virtual processing apparatus.

In this way, with the aid of the virtual data transmission apparatus, data can be more favorably acquired from the digital twin and sent to the virtual processing apparatus.

According to the embodiments of the present application, the third simulation unit accesses the first simulation unit via the API of the first simulation unit so that the virtual data transmission apparatus can acquire the first data from the digital twin.

In this way, the third simulation unit can utilize the API of the first simulation unit to realize the access to the first simulation unit.

According to the embodiments of the present application, the acquisition unit of the virtual data transmission apparatus acquires the first data, and the first sending unit of the virtual data transmission apparatus sends the first data acquired by the acquisition unit to the virtual processing apparatus.

In this way, first data can be acquired from the digital twin and the first data acquired by the acquisition unit can be sent to the virtual processing apparatus.

According to the embodiments of the present application, the receiving unit of the virtual data transmission apparatus receives a control signal from the virtual processing apparatus, wherein the control signal is a signal generated by the virtual processing apparatus based on second data obtained after the cloud system processes the first data and used for controlling the operations of the digital twin, and a second sending unit of the virtual data transmission apparatus sends the control signal to the digital twin.

In this way, the receiving unit receives a control signal from the virtual processing apparatus and the second sending unit sends the control signal to the digital twin. Thus, the control over the operations of the digital twin is realized.

According to the embodiments of the present application, the first communication unit of the virtual processing apparatus receives the first data from the virtual data transmission apparatus and sends the first data to the cloud system.

In this way, the first communication unit receives the first data from the virtual data transmission apparatus and sends the first data to a cloud system. Thus, data interactions between the first simulation unit and the cloud system are realized.

According to the present invention, the control signal generation unit of the virtual processing apparatus generates a control signal for controlling the operations of the digital twin based on second data obtained after the cloud system processes the first data, and the second communication unit of the virtual processing apparatus receives the second data, sends the second data to the control signal generation unit, receives a control signal from the control signal generation unit and sends the control signal to the virtual data transmission apparatus.

In this way, the control signal generation unit generates a control signal based on second data obtained after the cloud system processes the first data, and the second communication unit sends the control signal to the virtual data transmission apparatus and then to the digital twin of the first simulation unit. Thus, the control over the digital twin is realized.

According to the embodiments of the present application, the program editing unit of the virtual processing apparatus edits an upload program so that the first communication unit can execute the upload program to utilize the API of the cloud system to send the first data to the cloud system.

In this way, the second simulation unit generates the virtual processing apparatus consisting of a program editing unit, and the program editing unit is configured to edit an upload program. Thus, a program can be edited in the virtual processing apparatus and the problem that an upload program can be edited (debugged) only in a real plant in related technologies is solved.

According to the embodiments of the present application, the program editing unit further edits a download program so that the second communication unit can execute the download program to utilize the API of the cloud system to download second data obtained after the cloud system processes the first data to the virtual processing apparatus.

In this way, the program editing unit can edit a download program in the second communication unit and the problem that a download program can be edited (debugged) only in a real plant in related technologies is solved.

According to the embodiments of the present application, the program editing unit modifies program codes of at least one of the upload program and the download program to generate an upload program for replacing the current modified upload program or a download program for replacing the current modified download program.

In this way, at least one of the upload program and the download program can be improved so that a higher-performance upload program and download program can be used to replace the previous upload program and download program respectively.

According to the embodiments of the present application, the program editing unit modifies program codes of at least one of the upload program and the download program according to the received instruction.

In this way, an instruction can be sent to the program editor as required during the running of the upload program and/or download program so that the program editor can modify program codes.

According to the embodiments of the present application, the second simulation unit generates a virtual processing apparatus communication-connected with a connecting apparatus between a sensor for acquiring related data of at least one of the plant equipment and the technical process and the cloud system, and the connecting apparatus is configured to send data related to at least of one of the plant equipment and the technical process to the cloud system, receive data obtained after the cloud system processes the related data from the cloud system, generate a control signal based on the data obtained after the processing and send the control signal to a control system or the plant equipment to control at least one of the plant equipment and the technical process; the write unit of the data processing system writes the upload program after the modification into the connecting apparatus so that the connecting apparatus can execute the upload program after the modification to send data detected by the sensor and related to at least one of the plant equipment and the technical process to the cloud system, or writes the download program after the modification into the connecting apparatus so that the connecting apparatus can execute the download program after the modification to download the second data to the connecting apparatus.

In this way, after upload programs and download programs are debugged in the virtual processing apparatus and a higher-performance upload program and download program are obtained, the higher-performance upload program and download program can be written into the connecting apparatus connected between the plant equipment and the cloud system in a plant so that higher-performance programs are used to replace the original programs in the connecting apparatus to improve the data transmission performance.

According to the solutions of the embodiments of the present invention, engineers can debug an upload program and/or download program on the virtual processing apparatus (namely, virtual machine) of the second simulation unit. The performance of data transmission between the virtual machine and the cloud system is improved through upload and/or download program debugging, and the upload and/or download program debugging is called virtual debugging. After the virtual debugging, a mirror of a virtual processing apparatus (for example, virtual machine) can also be generated. The mirror is completely rewritten into a corresponding connecting apparatus, and thus the performance of data transmission of the connecting apparatus is improved. The connecting apparatus is communication-connected between a sensor for acquiring related data of at least one of the plant equipment and the technical process and the cloud system.

The virtual debugging process can establish the working environment of the virtual sensor. The user can first perform debugging in the virtual processing apparatus. By doing so, the development time can be reduced and joint debugging of the system can easily be realized. The virtual debugging process is a good combination of plant simulation software with cloud service and can fill the gap in the product line of virtual debugging.

Among the above-described embodiments of the present application, each embodiment has its own focal points. For the parts not described in an embodiment, please refer to the related description in other embodiments.

It should be understood that the technical content disclosed in the embodiments of the present application can be realized in other ways. The above-described embodiments of the apparatus are given only for illustrative purposes. The division of units or modules is only a logical function division, and other division methods may be used in the actual realization. For example, a plurality of units or modules or components may be combined or integrated into another system, or some features may be ignored or may not be executed. In addition, the shown or discussed couplings, or direct couplings or communication connections between them may be indirect couplings or communication connections, electrical or otherwise, through some interfaces, modules or units.

The unit or module described as a separate part may or may not be physically separated, and the part shown as a unit or module may or may not be a physical unit or module, that is to say, it may be located at one place or may be distributed to a plurality of network units or modules. Part or all of the units or modules may be selected to realize the solutions of the embodiments according to the actual requirement.

In addition, the functional units or modules in each embodiment of the present application can be integrated into a processing unit or module, or each unit or module physically exists separately, or two or more units or modules are integrated into a unit or module. The above-mentioned integrated unit or module may be realized in the form of hardware or in the form of a software functional unit or module.

The integrated unit may be stored in a computer-readable storage medium if it is realized in the form of a software functional unit and is marketed or used as an independent product. Based on such an understanding, the technical solutions of the present application or the part which makes contributions to the prior art, or all or part of the technical solutions, can essentially be embodied in the form of a software product, and the computer software product is stored in a storage medium and comprises a plurality of instructions to enable a computer (PC, server or network equipment) to execute all or part of the steps of the method described in the embodiments of the present application. The above-mentioned storage medium includes: USB disk, read-only memory (ROM), random access memory (RAM), mobile hard disk, magnetic disk or optical disk and other various media which can store program codes.

Only preferred embodiments of the present application are described above. It should be noted that those skilled in the art can make improvements and modifications without departing from the principle of the present application and these improvements and modifications should also fall within the scope of protection of the appended claims.

## Claims

1. A data processing system, **characterized in that** the system comprises:
a first simulation unit (22), configured to generate a digital twin (222) of at least one of plant equipment and a technical process;
a second simulation unit (24), configured to generate a virtual processing apparatus (240) so that the virtual processing apparatus (240) can receive first data coming from the digital twin (222) and related to the running of the digital twin (222) and send the received first data to a cloud system;
a third simulation unit (26), configured to generate a virtual data transmission apparatus (260) so that the virtual data transmission apparatus (260) can acquire the first data from the digital twin (222) and send the first data to the virtual processing apparatus (240);
wherein the second simulation unit (24) if further configured to generate the virtual processing apparatus (240) consisting of:
a first communication unit (242), configured to receive the first data from the virtual data transmission apparatus (260) and send the first data to the cloud system;
a control signal generation unit (248), configured to generate a control signal for controlling the operations of the digital twin (222) based on second data obtained after the cloud system processes the first data, and
a second communication unit (246), configured to receive the second data, send the second data to the control signal generation unit (248), receive a control signal from the control signal generation unit (248) and send the control signal to the virtual data transmission apparatus (260) ;
a program editing unit (244), configured to edit an upload program so that the first communication unit (242) can execute the upload program to utilize the application program interface of the cloud system to send the first data to the cloud system, wherein the program editing unit (244) is further configured to edit a download program so that the second communication unit (246) can execute the download program to utilize the application program interface API of the cloud system to download second data obtained after the cloud system processes the first data to the virtual processing apparatus (240).

2. The data processing system as claimed in claim 1, **characterized in that** the program editing unit (244) is further configured to modify program codes of at least one of the upload program and the download program to generate an upload program for replacing the current modified upload program or a download program for replacing the current modified download program.

3. The data processing system as claimed in claim 2, **characterized in that** the program editing unit (244) modifies program codes of at least one of the upload program and the download program according to the received instruction.

4. The data processing system as claimed in claim 2, **characterized in that**
the second simulation unit (24) is configured to generate a virtual processing apparatus communication-connected with a connecting apparatus between a sensor for acquiring related data of at least one of the plant equipment and the technical process and the cloud system, wherein the connecting apparatus is configured to send data detected by the sensor and related to at least of one of the plant equipment and the technical process to the cloud system, receive data obtained after the processing of the related data from the cloud system, generate a control signal based on the data obtained after the processing and send the control signal to a control system or the plant equipment to control at least one of the plant equipment and the technical process,
wherein the data processing system further comprises a write unit (36), which is configured to write the upload program after the modification into the connecting apparatus so that the connecting apparatus can execute the upload program after the modification to send data detected by the sensor and related to at least one of the plant equipment and the technical process to the cloud system, or configured to write the download program after the modification into the connecting apparatus so that the connecting apparatus can execute the download program after the modification to download the second data to the connecting apparatus.

5. A data processing method, **characterized in that** the method comprises the steps of:
generating a digital twin (222) of at least one of plant equipment and a technical process by a first simulation unit (22);
generating, by a second simulation unit (24), a virtual processing apparatus (240) so that the virtual processing apparatus (240) can receive first data coming from the digital twin (222) and related to the running of the digital twin (222) and send the received first data to a cloud system;
generating, by a third simulation unit (26), a virtual data transmission apparatus (260) so that the virtual data transmission apparatus (260) can acquire the first data from the digital twin (222) and send the first data to the virtual processing apparatus (240);
receiving, by a first communication unit (242) of the virtual processing apparatus (240), the first data from the virtual data transmission apparatus (260) and sending, by the first communication unit (242) of the virtual processing apparatus (240), the first data to the cloud system;
generating, by a control signal generation unit (248) of the virtual processing apparatus (240), a control signal for controlling the operations of the digital twin (222) based on second data obtained after the cloud system processes the first data;
receiving, by a second communication unit (246) of the virtual processing apparatus (240), the second data, sending, by the second communication unit (246) of the virtual processing apparatus (240), the second data to the control signal generation unit (248), receiving, by the second communication unit (246) of the virtual processing apparatus (240), a control signal from the control signal generation unit (248) and sending, by the second communication unit (246) of the virtual processing apparatus (240), the control signal to the virtual data transmission apparatus (260); and
editing, by a program editing unit (244) of the virtual processing apparatus (240), an upload program so that the first communication unit (242) can execute the upload program to utilize the application program interface of the cloud system to send the first data to the cloud system,
editing, by the program editing unit (244), a download program so that the second communication unit (246) can execute the download program to utilize the application program interface of the cloud system to download second data obtained after the cloud system processes the first data to the virtual processing apparatus (240).

6. The data processing method as claimed in claim 5, **characterized in that** the method further comprises:
modifying, by the program editing unit (244), program codes of at least one of the upload program and the download program to generate an upload program for replacing the current modified upload program or a download program for replacing the current modified download program.

7. The data processing method as claimed in claim 6, **characterized in that** the method further comprises:
modifying, by the program editing unit (244), program codes of at least one of the upload program and the download program according to the received instruction.

8. The data processing method as claimed in claim 6, **characterized in that** the method further comprises:
generating, by the second simulation unit (24), a virtual processing apparatus communication-connected with a connecting apparatus between a sensor for acquiring related data of at least one of the plant equipment and the technical process and the cloud system, wherein the connecting apparatus is configured to send data detected by the sensor and related to at least of one of the plant equipment and the technical process to the cloud system, receive data obtained after the processing of the related data from the cloud system, generate a control signal based on the data obtained after the processing and send the control signal to a control system or the plant equipment to control at least one of the plant equipment and the technical process,
wherein a write unit (36) of the data processing system is configured to write the upload program after the modification into the connecting apparatus so that the connecting apparatus can execute the upload program after the modification to send data detected by the sensor and related to at least one of the plant equipment and the technical process to the cloud system, or configured to write the download program after the modification into the connecting apparatus so that the connecting apparatus can execute the download program after the modification to download the second data to the connecting apparatus.

## Patentansprüche

1. Datenverarbeitungssystem, **dadurch gekennzeichnet, dass** das System Folgendes umfasst:
eine erste Simulationseinheit (22), die so ausgelegt ist, dass sie einen digitalen Zwilling (222) von mindestens einer der Anlagenausrüstung und einem technischen Prozess erzeugt;
eine zweite Simulationseinheit (24), die so ausgelegt ist, dass sie eine virtuelle Verarbeitungsvorrichtung (240) erzeugt, so dass die virtuelle Verarbeitungsvorrichtung (240) erste Daten empfangen kann, die von dem digitalen Zwilling (222) kommen und sich auf den Betrieb des digitalen Zwillings (222) beziehen, und die empfangenen ersten Daten an ein Cloud-System senden kann;
eine dritte Simulationseinheit (26), die ausgelegt ist, um eine virtuelle Datenübertragungsvorrichtung (260) zu erzeugen, so dass die virtuelle Datenübertragungsvorrichtung (260) die ersten Daten von dem digitalen Zwilling (222) erfassen und die ersten Daten an die virtuelle Verarbeitungsvorrichtung (240) senden kann;
wobei die zweite Simulationseinheit (24) ferner so ausgelegt ist, dass sie die virtuelle Verarbeitungsvorrichtung (240) erzeugt, die aus folgenden Elementen besteht:
einer ersten Kommunikationseinheit (242), die ausgelegt ist, um die ersten Daten von der virtuellen Datenübertragungsvorrichtung (260) zu empfangen und die ersten Daten an das Cloud-System zu senden;
einer Steuersignal-Erzeugungseinheit (248), die so ausgelegt ist, dass sie ein Steuersignal zum Steuern der Operationen des digitalen Zwillings (222) auf der Grundlage von zweiten Daten erzeugt, die erhalten werden, nachdem das Cloud-System die ersten Daten verarbeitet hat, und
einer zweiten Kommunikationseinheit (246), die so ausgelegt ist, dass sie die zweiten Daten empfängt, die zweiten Daten an die Steuersignal-Erzeugungseinheit (248) sendet, ein Steuersignal von der Steuersignal-Erzeugungseinheit (248) empfängt und das Steuersignal an die virtuelle Datenübertragungsvorrichtung (260) sendet;
einer Programmbearbeitungseinheit (244), die so ausgelegt ist, dass sie ein Upload-Programm bearbeitet, so dass die erste Kommunikationseinheit (242) das Upload-Programm ausführen kann, um die Anwendungsprogrammschnittstelle des Cloud-Systems zu nutzen, um die ersten Daten an das Cloud-System zu senden,
wobei die Programmbearbeitungseinheit (244) ferner so ausgelegt ist, dass sie ein Download-Programm bearbeitet, so dass die zweite Kommunikationseinheit (246) das Download-Programm ausführen kann, um die Anwendungsprogrammschnittstelle des Cloud-Systems zu nutzen, um zweite Daten, die erhalten werden, nachdem das Cloud-System die ersten Daten verarbeitet hat, in die virtuelle Verarbeitungsvorrichtung (240) herunterzuladen.

2. Datenverarbeitungssystem nach Anspruch 1, **dadurch gekennzeichnet, dass** die Programmbearbeitungseinheit (244) ferner so ausgelegt ist, dass sie Programmcodes des Upload-Programms und/oder des Download-Programms modifiziert, um ein Upload-Programm zum Ersetzen des aktuellen modifizierten Upload-Programms oder ein Download-Programm zum Ersetzen des aktuellen modifizierten Download-Programms zu erzeugen.

3. Datenverarbeitungssystem nach Anspruch 2, **dadurch gekennzeichnet, dass** die Programmbearbeitungseinheit (244) Programmcodes des Upload-Programms und/oder des Download-Programms entsprechend der empfangenen Anweisung modifiziert.

4. Datenverarbeitungssystem nach Anspruch 2, **dadurch gekennzeichnet, dass** die zweite Simulationseinheit (24) so ausgelegt ist, dass sie eine virtuelle Verarbeitungsvorrichtung erzeugt, die mit einer Verbindungsvorrichtung zwischen einem Sensor zum Erfassen zugehöriger Daten von mindestens einem der Anlagenausrüstung und des technischen Prozesses und dem Cloud-System kommunikationsverbunden ist,
wobei die Verbindungsvorrichtung für Folgendes ausgelegt ist:
Senden der vom Sensor erfassten Daten, die sich auf mindestens eine der Anlagenausrüstung und den technischen Prozess beziehen, an das Cloud-System,
Empfangen der nach der Verarbeitung der entsprechenden Daten vom Cloud-System erhaltenen Daten,
Erzeugen eines Steuersignals auf der Grundlage der nach der Verarbeitung erhaltenen Daten, und
Senden des Steuersignals an ein Steuersystem oder die Anlagenausrüstung, um mindestens eine der Anlagenausrüstung und den technischen Prozess zu steuern,
wobei das Datenverarbeitungssystem ferner eine Schreibeinheit (36) umfasst, die so ausgelegt ist, dass sie das Upload-Programm nach der Modifikation in die Verbindungsvorrichtung schreibt, so dass die Verbindungsvorrichtung das Upload-Programm nach der Modifikation ausführen kann, um Daten, die von dem Sensor erfasst werden und sich auf mindestens eines von der Anlagenausrüstung und dem technischen Prozess beziehen, an das Cloud-System zu senden, oder so ausgelegt ist, dass sie das Download-Programm nach der Modifikation in die Verbindungsvorrichtung schreibt, so dass die Verbindungsvorrichtung das Download-Programm nach der Modifikation ausführen kann, um die zweiten Daten in die Verbindungsvorrichtung herunterzuladen.

5. Datenverarbeitungsverfahren, **dadurch gekennzeichnet, dass** das Verfahren die folgenden Schritte umfasst:
Erzeugen eines digitalen Zwillings (222) von mindestens einer der Anlagenausrüstung und eines technischen Prozesses durch eine erste Simulationseinheit (22) ;
Erzeugen, durch eine zweite Simulationseinheit (24), einer virtuellen Verarbeitungsvorrichtung (240), so dass die virtuelle Verarbeitungsvorrichtung (240) erste Daten empfangen kann, die von dem digitalen Zwilling (222) kommen und sich auf den Betrieb des digitalen Zwillings (222) beziehen, und die empfangenen ersten Daten an ein Cloud-System senden kann;
Erzeugen, durch eine dritte Simulationseinheit (26), einer virtuellen Datenübertragungsvorrichtung (260), so dass die virtuelle Datenübertragungsvorrichtung (260) die ersten Daten von dem digitalen Zwilling (222) erfassen und die ersten Daten an die virtuelle Verarbeitungsvorrichtung (240) senden kann;
Empfangen, durch eine erste Kommunikationseinheit (242) der virtuellen Verarbeitungsvorrichtung (240), der ersten Daten von der virtuellen Datenübertragungsvorrichtung (260) und Senden, durch die erste Kommunikationseinheit (242) der virtuellen Verarbeitungsvorrichtung (240), der ersten Daten an das Cloud-System;
Erzeugen, durch eine Steuersignal-Erzeugungseinheit (248) der virtuellen Verarbeitungsvorrichtung (240), eines Steuersignals zum Steuern der Operationen des digitalen Zwillings (222) basierend auf zweiten Daten, die erhalten wurden, nachdem das Cloud-System die ersten Daten verarbeitet hat;
Empfangen, durch eine zweite Kommunikationseinheit (246) der virtuellen Verarbeitungsvorrichtung (240), der zweiten Daten,
Senden, durch die zweite Kommunikationseinheit (246) der virtuellen Verarbeitungsvorrichtung (240), der zweiten Daten an die Steuersignal-Erzeugungseinheit (248),
Empfangen, durch die zweite Kommunikationseinheit (246) der virtuellen Verarbeitungsvorrichtung (240), eines Steuersignals von der Steuersignal-Erzeugungseinheit (248), und
Senden, durch die zweite Kommunikationseinheit (246) der virtuellen Verarbeitungsvorrichtung (240), des Steuersignals an die virtuelle Datenübertragungsvorrichtung (260); und
Bearbeiten, durch eine Programmbearbeitungseinheit (244) der virtuellen Verarbeitungsvorrichtung (240), eines Upload-Programms, so dass die erste Kommunikationseinheit (242) das Upload-Programm ausführen kann, um die Anwendungsprogrammschnittstelle des Cloud-Systems zu nutzen, um die ersten Daten an das Cloud-System zu senden,
Bearbeiten, durch die Programmbearbeitungseinheit (244), eines Download-Programms, so dass die zweite Kommunikationseinheit (246) das Download-Programm ausführen kann, um die Anwendungsprogrammschnittstelle des Cloud-Systems zu nutzen, um zweite Daten, die erhalten werden, nachdem das Cloud-System die ersten Daten verarbeitet hat, in die virtuelle Verarbeitungsvorrichtung (240) herunterzuladen.

6. Datenverarbeitungsverfahren nach Anspruch 5, **dadurch gekennzeichnet, dass** das Verfahren ferner Folgendes umfasst:
Modifizieren, durch die Programmbearbeitungseinheit (244), von Programmcodes des Upload-Programms und/oder des Download-Programms, um ein Upload-Programm zum Ersetzen des aktuellen modifizierten Upload-Programms oder ein Download-Programm zum Ersetzen des aktuellen modifizierten Download-Programms zu erzeugen.

7. Datenverarbeitungsverfahren nach Anspruch 6, **dadurch gekennzeichnet, dass** das Verfahren ferner Folgendes umfasst:
Modifizieren, durch die Programmbearbeitungseinheit (244), von Programmcodes des Upload-Programms und/oder des Download-Programms gemäß der empfangenen Anweisung.

8. Datenverarbeitungsverfahren nach Anspruch 6, **dadurch gekennzeichnet, dass** das Verfahren ferner Folgendes umfasst:
Erzeugen, durch die zweite Simulationseinheit (24), einer virtuellen Verarbeitungsvorrichtung, die mit einer Verbindungsvorrichtung zwischen einem Sensor zum Erfassen verwandter Daten von mindestens einem der Anlagenausrüstung und des technischen Prozesses und dem Cloud-System kommuniziert,
wobei die Verbindungsvorrichtung so ausgelegt ist, dass sie von dem Sensor erfasste Daten, die sich auf mindestens eine der Anlagenausrüstung und den technischen Prozess beziehen, an das Cloud-System sendet,
Empfangen von Daten, die nach der Verarbeitung der zugehörigen Daten von dem Cloud-System erhalten wurden, Erzeugen eines Steuersignals auf der Grundlage der nach der Verarbeitung erhaltenen Daten, und Senden des Steuersignals an ein Steuersystem oder die Anlagenausrüstung, um mindestens eine der Anlagenausrüstung und den technischen Prozess zu steuern,
wobei eine Schreibeinheit (36) des Datenverarbeitungssystems so ausgelegt ist, dass sie das Upload-Programm nach der Modifikation in die Verbindungsvorrichtung schreibt, so dass die Verbindungsvorrichtung das Upload-Programm nach der Modifikation ausführen kann, um Daten, die von dem Sensor erfasst werden und sich auf mindestens eines von der Anlagenausrüstung und dem technischen Prozess beziehen, an das Cloud-System zu senden, oder so ausgelegt ist, dass sie das Download-Programm nach der Modifikation in die Verbindungsvorrichtung schreibt, so dass die Verbindungsvorrichtung das Download-Programm nach der Modifikation ausführen kann, um die zweiten Daten auf die Verbindungsvorrichtung herunterzuladen.

## Revendications

1. Système de traitement de données, **caractérisé en ce que** le système comprend :
une première unité de simulation (22), configurée pour générer un jumeau numérique (222) d'au moins un équipement d'usine et d'un processus technique ;
une deuxième unité de simulation (24), configurée pour générer un appareil de traitement virtuel (240) de sorte que l'appareil de traitement virtuel (240) puisse recevoir des premières données provenant du jumeau numérique (222) et relatives au fonctionnement du jumeau numérique (222) et envoyer les premières données reçues à un système en nuage ;
une troisième unité de simulation (26), configurée pour générer un appareil virtuel de transmission de données (260) de sorte que l'appareil virtuel de transmission de données (260) puisse acquérir les premières données du jumeau numérique (222) et envoyer les premières données à l'appareil virtuel de traitement (240) ;
où la deuxième unité de simulation (24) est en outre configurée pour générer l'appareil de traitement virtuel (240) composé de :
une première unité de communication (242), configurée pour recevoir les premières données de l'appareil virtuel de transmission de données (260) et envoyer les premières données au système en nuage ;
une unité de génération de signaux de commande (248), configurée pour générer un signal de commande destiné à contrôler les opérations du jumeau numérique (222) sur la base des deuxièmes données obtenues après que le système en nuage a traité les premières données, et
une deuxième unité de communication (246), configurée pour recevoir les deuxièmes données, envoyer les deuxièmes données à l'unité de génération de signaux de commande (248), recevoir un signal de commande de l'unité de génération de signaux de commande (248) et envoyer le signal de commande à l'appareil virtuel de transmission de données (260) ;
une unité d'édition de programmes (244), configurée pour éditer un programme de téléchargement afin que la première unité de communication (242) puisse exécuter le programme de téléchargement pour utiliser l'interface de programme d'application du système en nuage afin d'envoyer les premières données au système en nuage,
l'unité d'édition de programmes (244) étant en outre configurée pour éditer un programme de téléchargement afin que la deuxième unité de communication (246) puisse exécuter le programme de téléchargement pour utiliser l'interface de programme d'application du système en nuage afin de télécharger en liaison descendante les deuxièmes données obtenues après que le système en nuage a traité les premières données vers l'appareil de traitement virtuel (240).

2. Système de traitement de données tel que revendiqué dans la revendication 1, **caractérisé en ce que** l'unité d'édition de programmes (244) est en outre configurée pour modifier les codes de programme d'au moins un du programme de téléchargement en liaison montante et du programme de téléchargement en liaison descendante pour générer un programme de téléchargement en liaison montante destiné à remplacer le programme de téléchargement en liaison montante modifié courant ou un programme de téléchargement en liaison descendante destiné à remplacer le programme de téléchargement en liaison descendante modifié courant.

3. Système de traitement de données tel que revendiqué dans la revendication 2, **caractérisé en ce que** l'unité d'édition de programmes (244) modifie les codes de programme d'au moins un du programme de téléchargement en liaison montante et du programme de téléchargement en liaison descendante en fonction de l'instruction reçue.

4. Système de traitement de données tel que revendiqué dans la revendication 2, **caractérisé en ce que** :
la deuxième unité de simulation (24) est configurée pour générer un appareil de traitement virtuel relié par communication à un appareil de connexion entre un capteur pour l'acquisition de données relatives à au moins un de l'équipement d'usine et du processus technique et du système en nuage, où l'appareil de connexion est configuré pour envoyer des données détectées par le capteur et relatives à au moins un de l'équipement d'usine et du processus technique au système en nuage, recevoir du système en nuage les données obtenues après le traitement des données connexes, générer un signal de commande basé sur les données obtenues après le traitement et envoyer le signal de commande à un système de commande ou à l'équipement d'usine pour contrôler au moins un de l'équipement d'usine et du processus technique,
système de traitement des données comprenant en outre une unité d'écriture (36), configurée pour écrire le programme de téléchargement en liaison montante après la modification dans l'appareil de connexion afin que l'appareil de connexion puisse exécuter le programme de téléchargement en liaison montante après la modification pour envoyer les données détectées par le capteur et liées à au moins un de l'équipement d'usine et du processus technique vers le système en nuage, ou configurée pour écrire le programme de téléchargement en liaison descendante après la modification dans l'appareil de connexion afin que l'appareil de connexion puisse exécuter le programme de téléchargement en liaison descendante après la modification pour télécharger en liaison descendante les deuxièmes données vers l'appareil de connexion.

5. Procédé de traitement de données, **caractérisé en ce que** le procédé comprend les étapes suivantes :
générer un jumeau numérique (222) d'au moins un d'un équipement d'usine et d'un processus technique par une première unité de simulation (22) ;
générer, par une deuxième unité de simulation (24), un appareil de traitement virtuel (240) de sorte que l'appareil de traitement virtuel (240) puisse recevoir les premières données provenant du jumeau numérique (222) et relatives au fonctionnement du jumeau numérique (222), et envoyer les premières données reçues à un système en nuage ;
générer, par une troisième unité de simulation (26), un appareil virtuel de transmission de données (260) de sorte que l'appareil virtuel de transmission de données (260) puisse acquérir les premières données provenant du jumeau numérique (222) et envoyer les premières données à l'appareil de traitement virtuel (240) ; recevoir, par une première unité de communication (242) de l'appareil de traitement virtuel (240), les premières données de l'appareil virtuel de transmission de données (260) et envoyer, par la première unité de communication (242) de l'appareil de traitement virtuel (240), les premières données au système en nuage ;
générer, par une unité de génération de signaux de commande (248) de l'appareil de traitement virtuel (240), un signal de commande pour contrôler les opérations du jumeau numérique (222) sur la base des deuxièmes données obtenues après le traitement des premières données par le système en nuage ;
recevoir, par une deuxième unité de communication (246) de l'appareil de traitement virtuel (240), les deuxièmes données, envoyer, par la deuxième unité de communication (246) de l'appareil de traitement virtuel (240), les deuxièmes données à l'unité de génération de signaux de commande (248), recevoir, par la deuxième unité de communication (246) de l'appareil de traitement virtuel (240), un signal de commande de l'unité de génération de signaux de commande (248) et envoyer, par la deuxième unité de communication (246) de l'appareil de traitement virtuel (240), le signal de commande à l'appareil virtuel de transmission de données (260) ; et
éditer, par une unité d'édition de programmes (244) de l'appareil de traitement virtuel (240), un programme de téléchargement en liaison montante afin que la première unité de communication (242) puisse exécuter le programme de téléchargement en liaison montante pour utiliser l'interface de programme d'application du système en nuage afin d'envoyer les premières données au système en nuage,
éditer, par l'unité d'édition de programmes (244), un programme de téléchargement en liaison descendante afin que la deuxième unité de communication (246) puisse exécuter le programme de téléchargement en liaison descendante pour utiliser l'interface de programme d'application du système en nuage afin de télécharger les deuxièmes données obtenues après que le système en nuage a traité les premières données vers l'appareil de traitement virtuel (240).

6. Procédé de traitement de données tel que revendiqué dans la revendication 5, **caractérisé en ce que** le procédé comprend en outre l'étape suivante :
modifier, par l'unité d'édition de programmes (244), des codes de programme d'au moins un du programme de téléchargement en liaison montante et du programme de téléchargement en liaison descendante pour générer un programme de téléchargement en liaison montante destiné pour remplacer le programme de téléchargement en liaison montante modifié courant ou un programme de téléchargement en liaison descendante pour remplacer le programme de téléchargement en liaison descendante modifié courant.

7. Procédé de traitement de données tel que revendiqué dans la revendication 6, **caractérisé en ce que** le procédé comprend en outre l'étape suivante :
modifier, par l'unité d'édition de programmes (244), des codes de programme d'au moins un du programme de téléchargement en liaison montante et du programme de téléchargement en liaison descendante conformément à l'instruction reçue.

8. Procédé de traitement de données tel que revendiqué dans la revendication 6, **caractérisé en ce que** le procédé comprend en outre les étapes suivantes :
générer, par la deuxième unité de simulation (24), un appareil de traitement virtuel relié par communication à un appareil de connexion entre un capteur pour l'acquisition de données relatives à au moins un de l'équipement d'usine et du processus technique et du système en nuage, où l'appareil de connexion est configuré pour envoyer des données détectées par le capteur et relatives à au moins un de l'équipement d'usine et du processus technique au système en nuage, recevoir des données obtenues après le traitement des données connexes depuis le système en nuage, générer un signal de commande basé sur les données obtenues après le traitement et envoyer le signal de commande à un système de commande ou à l'équipement d'usine pour commander au moins un de l'équipement d'usine et du processus technique, où une unité d'écriture (36) du système de traitement de données est configurée pour écrire le programme de téléchargement en liaison montante après la modification dans l'appareil de connexion afin que l'appareil de connexion puisse exécuter le programme de téléchargement après la modification pour envoyer des données détectées par le capteur et liées à au moins un de l'équipement d'usine et du processus technique au système en nuage, ou configurée pour écrire le programme de téléchargement après la modification dans l'appareil de connexion afin que l'appareil de connexion puisse exécuter le programme de téléchargement après la modification pour télécharger en liaison descendante les deuxièmes données vers l'appareil de connexion.
